# EUROPEAN PATENT APPLICATION

(11) **EP 0 963 879 A2**
(43) Date of publication of application: **15.12.1999**
(21) Application number: 99109376.6
(22) Date of filing: 02.06.1999
(51) Int. Cl.: B60R 21/16

(54) **Side airbag**

(30) Priority: 08.06.1998 JP 15929498
(71) Applicant: TAKATA CORPORATION, Minato-ku, Tokyo (JP)
(72) Inventor: Kumagai, Masayoshi, Minato-ku, Tokyo (JP); Masuda, Yasushi, Minato-ku, Tokyo (JP); Mizuno, Hideki, Minato-ku, Tokyo (JP)
(74) Representative: Kraus, Walter, Dr.

(57) **Abstract**

A side airbag 1, which inflates quickly even when the gas pressure generated by an inflator is low, has a main part 4 elongated in the vertical direction and a sub part 5 to be projecting rearwardly from an upper portion of the main part 4. The main part 4 has an inflator insertion opening 6 at its lower portion. The sub part 5 is folded and arranged inside the upper portion of the main part 4. The main part 4 and the sub part 5 thus folded and arranged are sewn to each other by a tear seam 7. The main part 4 is provided with a gas guide 8 at a portion about the middle in the vertical direction. The gas guide 8 is formed by sewing the panels 2, 3 by a sewing yarn. As an inflator is actuated, the main part 4 is substantially fully inflated as a whole and, after that, the tear seam 7 is torn so that the sub part 5 is inflated rearwardly from the upper portion of the main part 4.

## Description

### BACKGROUND OF THE INVENTION AND RELATED ART STATEMENT

The present invention relates to a side airbag for protecting an occupant in a seat of a vehicle preferably an automobile and, more particularly, to a side airbag of a type which is inflated upwards from a lower portion of a seat side.

A side airbag is arranged on along a side of an automobile seat and is inflated upwards between an occupant and a side wall such as a door when an inflator is actuated to generate gases.

An automobile seat is provided with a seat belt device of which a shoulder belt extends along a side of an upper portion of a seat back of a seat.

When the side airbag is inflated upwards, the side airbag rubs against the shoulder belt, and the shoulder belt gives frictional resistance to the side airbag. The inflator for the side airbag is required to generate gases having pressure enough high for overcoming this frictional resistance and inflating quickly the side airbag.

### OBJECT AND SUMMARY OF THE INVENTION

An object of the present invention is to provide a side airbag which inflates quickly even when an inflator generates gas at low pressure.

A side airbag of the present invention has a main part capable of expanding in the vertical direction, and a sub part capable of projecting rearwardly from an upper portion of the expanded main part. The main part is provided with a gas inlet or an inflator insertion opening formed in a lower portion thereof. The side airbag is arranged at a lower portion at a side of a vehicle seat and is inflated upwards with gas from an inflator.

When the inflator generates gas, first the main part is inflated upwards and then the sub part is inflated rearwardly from the upper portion of the main part. The main part of the side airbag is inflated in front of and relatively apart from the shoulder belt and, after that, the sub part is inflated rearwardly from the upper portion of the main part. The side airbag is inflated without or substantially without rubbing the shoulder belt with frictional resistance. Even when the inflator generates gas at low pressure, the side airbag inflates quickly and smoothly.

The sub part may be folded and arranged inside the main part. The sub part and the main part may be connected or bonded to each other by a provisional or tentative connecting means so that the sub part of the side airbag is inflated from the upper portion of the main part by releasing the connection during the actuation of the inflator. The connecting means may be a tear seam, that is stitching by a relatively weak yarn.

The main part may be provided with a gas guide at a portion about the middle in the vertical direction to guide gas toward the front edge of the side airbag. The gas guide guides gas from the inflator to flow upwards along the front edge in the main part so that the sub part is inflated rearwardly after the front side of the main part is sufficiently inflated with gas.

### BRIEF DESCRIPTION OF THE DRAWINGS

Fig. 1a is a perspective view of an automobile cabin which is provided with a side airbag, the side airbag being shown in a process of its inflation.
Fig. 1b is a perspective view of the automobile cabin which is provided with the side airbag, the side airbag being shown in the fully inflated state.
Fig. 2a is a side view of the side airbag before its inflation.
Fig. 2b is a side view of the side airbag in the fully inflated state.
Fig. 2c is a sectional view taken along a line C-C of Fig. 2a.
Fig. 2d is a sectional view taken along a line D-D of Fig. 2b.
Fig. 2e is a sectional view taken along a line E-E of Fig. 2b.

### DETAILED DESCRIPTION OF PREFERRED EMBODIMENTS

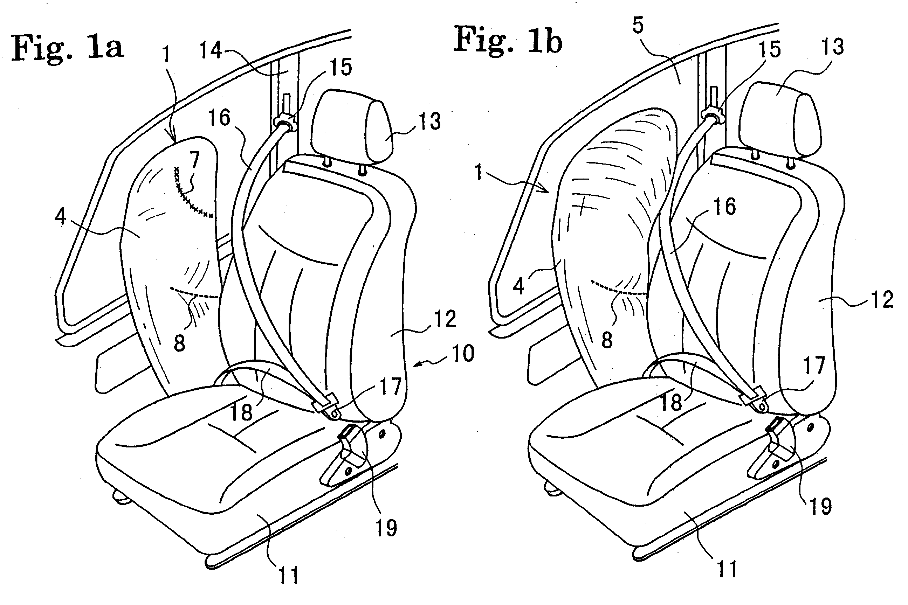

Hereinafter, a side airbag according to a preferred embodiment will be described with reference to Figs 1a through 2e.

An envelope-shaped side airbag 1 has panels 2, 3 which are connected along their peripheries by sewing, bonding, welding, or the like.

The side airbag 1 has a main part 4 elongated in the vertical direction and a sub part 5 extending rearwardly from an upper portion of the main part 4. The main part 4 is provided with an insertion opening 6 for an inflator which is formed in a lower portion thereof.

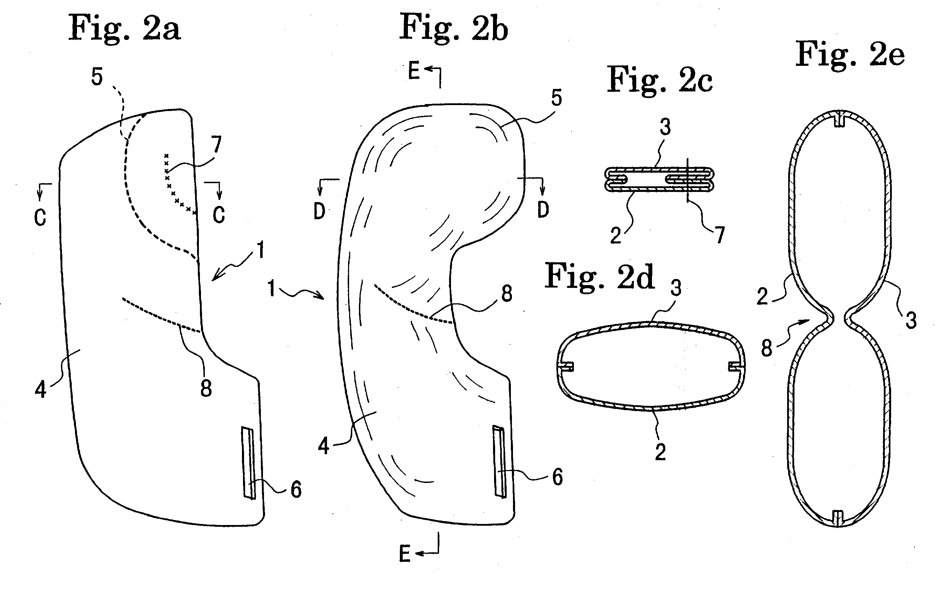

As shown in Figs. 2a and 2c, the sub part 5 is folded and arranged inside the main part 4. The main part 4 and the sub part 5 which is folded and arranged as mentioned are sewn to each other by a tear seam 7.

The main part 4 is provided with a gas guide 8 which is formed at substantially the middle in the vertical direction of the main part 4 by sewing up the corresponding portions of the panels 2, 3 with a sewing yarn.

The gas guide 8 extends obliquely upwardly from a rear edge toward a front edge of the side airbag. The front end of the gas guide 8 is positioned apart from the front edge of the main part 4 so as to allow gas to flow upwards between the front end of the gas guide 8 and the front edge of the main part 4.

A portion around the insertion opening 6 of the side airbag 1 is connected to a casing (not shown) of a side airbag device and the side airbag 1 is folded and accommodated inside the casing. The inflator is inserted into the side airbag 1 through the insertion opening 6. The casing may be located on a side surface of a seat cushion, an inner surface of the door, or a floor member of the vehicle.

As shown in Figs. 1a, 1b, the seat 10 in the automobile has the seat cushion 11, a seat back 12, and a head rest 13. A deflector 15 of a shoulder anchor is disposed on a center pillar 14 and a shoulder belt 16 is hooked by the deflector 15. The shoulder belt 16 is passed through a tongue 17 to function as a lap belt after the tongue 17. The tongue 17 should be engaged with the buckle 19.

The side airbag device may be installed on the side, such as the side surface, of the seat cushion 11. In the event of a side collision or a roll-over of the automobile, the inflator is actuated to generate gas to inflate the side airbag 1.

When the side airbag 1 is inflated, first the main part 4 is inflated upwards as shown in Fig. 1a and, after that, the sub part 5 is inflated to extend rearwardly from the upper portion of the main part 4 as shown in Fig. 1b.

In the process of the inflation, little or no rubbing of the side airbag 1 takes place against the shoulder belt 16 so that the side airbag 1 inflates quickly and smoothly even if the inflator generates gas at low pressure.

In this embodiment, the sub part 5 and the upper portion of the main part 4 are sewn to each other by the tear seam 7. After the overall main part 4 is inflated substantially fully, the tear seam 7 is torn so that the sub part 5 is inflated rearwardly from the upper portion of the main part 4. Accordingly, the main part 4 inflates without or substantially without touching the shoulder belt 16. There is a possibility that the sub part 5 touches the shoulder belt 16 just before the completion of the inflation, but the sub part 5 just slightly touches the shoulder belt 16 at this time.

In this embodiment, when the main part 4 is inflated upwards, gas in the main part 4 is guided by the gas guide 8 to flow upwards primarily along the front edge of the main part 4. As for the portion above the gas guide 8 of the main part 4, first a portion at the front edge side is inflated, and then a portion at the rear edge side is inflated. After the main part 4 is substantially fully inflated as a whole, the tear seam 7 is torn to allow the sub part 5 to be inflated rearwardly. Therefore, the sub part 5 is inflated rearwardly from the upper portion of the main part 4 after the main part 4 is sufficiently inflated in the vertical direction.

Though the insertion opening 6 for the inflator is provided in this embodiment, in case where the inflator is arranged outside the side airbag, an inlet for introducing gas from the inflator is formed in the lower portion of the side airbag.

As mentioned above, the side airbag of the present invention inflates quickly and smoothly even when the gas pressure generated by the inflator is low.

## Claims

1. A side airbag which is arranged at a lower portion of a vehicle seat and is inflatable upwards with gas, comprising:
a main part capable of expanding in the vertical direction, and
a sub part capable of projecting rearwardly from an upper portion of the expanded main part,
said main part being provided with an opening for gas or an inflator at a lower portion thereof.

2. The side airbag as claimed in claim 1, wherein said sub part is folded and arranged inside said main part.

3. The side airbag as claimed in claim 2, wherein the sub part and the main part are connected to each other by a provisional connecting means, and wherein said means releases the connection during the inflation of the side airbag so as to allow the sub part to be inflated.

4. The side airbag as claimed in claim 3, wherein the connecting means is a tear seam.

5. The side airbag as claimed in any one of claims 1 through 4, wherein said main part is provided with a gas guide at a portion about the middle in the vertical direction to guide gas toward the front edge of the side airbag.

6. The side airbag as claimed in any one of claims 1 through 5, wherein the side airbag is inflated without or substantially without touching a shoulder belt.

7. The side airbag as claimed in claim 3 or 4, wherein the sub portion is inflated rearwardly from the upper portion of the main part after the main part is substantially inflated in the vertical direction.
